# EUROPÄISCHE PATENTSCHRIFT

(11) **EP 0 986 796 B1**
(45) Veröffentlichungstag und Bekanntmachung des Hinweises auf die Patenterteilung: **04.09.2002**
(21) Anmeldenummer: 98933589.8
(22) Anmeldetag: 04.06.1998
(51) Int. Cl.: G06K 19/16, B42D 15/10

(54) **DIFFRAKTIVES FLÄCHENMUSTER**
DIFFRACTIVE SURFACE PATTERN
MOTIF DE SURFACE DE DIFFRACTION

(30) Priorität: 06.06.1997 CH 136897
(43) Veröffentlichungstag der Anmeldung: 22.03.2000
(73) Patentinhaber: OVD Kinegram AG, 6301 Zug (CH)
(72) Erfinder: STAUB, René, CH-6330 Cham (CH); TOMPKIN, Wayne, Robert, CH-5400 Baden (CH)
(74) Vertreter: LOUIS, PÖHLAU, LOHRENTZ & SEGETH
(86) Internationale Anmeldenummer: EP9803324
(87) Internationale Veröffentlichungsnummer: WO98055964

(56) Entgegenhaltungen:
- EP-A- 0 375 833
- EP-A- 0 401 466
- WO-A-92/04692
- WO-A-95/04948
- DE-U- 29 700 289
- US-A- 5 101 184
- US-A- 5 379 131

## Beschreibung

Die Erfindung bezieht sich auf Flächenmuster der im Oberbegriff des Ansprüche 1 und 5 genannten Art und auf die Verwendung dieses Flächenmusters.

Solche Flächenmuster eignen sich als Sicherheits - und Echtheitsmerkmal auf Dokumenten, wie zum Beispiel Banknoten, Wertpapiere, Ausweise, Pässe, Kredit - und andere Identitätskarten, "smart cards" in jeglicher Form usw.

Aus den Patentschriften EP-A 105'099, EP-A 330'738, EP-A 375'833 und EP-A 537'439 sind in Kunststoff eingeprägte, beugungsoptische Sicherheitsmerkmale mit N Mustern und äusserst feinen Filigran - Strukturen, wie z.B. Guillochen bekannt, deren Bildinhalt sich beim Drehen um eine Achse vorbestimmt verändert. Diesen Sicherheitsmerkmalen fehlt eine maschinell auslesbare Information.

Solche Sicherheitsmerkmale sind in ein Laminat aus Kunststoff eingebettet (EP-A 401'466) und können auf ein Substrat aufgeklebt werden.

Weiter sind Volumenhologramme (H. J. Caulfield: "Handbook of Optical Holography", Seiten 202 - 204, 228 - 119, Academic Press, Inc., 1979, ISBN 0-12-165350-1) bekannt. Ausgehend von einem lichtempfindlichen Film oder Folie wird das Hologramm durch Belichtung mit Referenz - und Objektstrahlen aus einem Laser erzeugt, wobei die Interferenzen zwischen den Referenzstrahlen und den Objektstrahlen lokale Aenderungen des Brechungsindex in der Folie erzeugen, die örtlich in Form von eng gestaffelten, jalousieförmig angeordneten Ebenen (= "fringes") innerhalb der dicken, lichtempfindlichen Schicht vorliegen. Nach dem Entwickeln ist der Film praktisch durchsichtig, während gleichzeitig unter vorbestimmten Bedingungen das in Folie eindringende Licht mit grosser Effizienz an den "fringes" gebeugt wird.

Aus der US-A 5 379 131 ist ein innerhalb eines Beugungsgittermosaiks angeordneter Barcode bekannt, dessen schmale und parallele Teilflächen ebenfalls Licht beugende Teilstrukturen aufweisen. Jede der Teilflächen ist mit einer einzigen Teilstruktur "a" oder weist zwei Flächenanteile mit den Teilstrukturen "a" und "b" auf. Zum visuellen oder maschinellen Auslesen wird das am Beugungsgittermosaik und den Teilstrukturen des Barcodes gebeugte Licht vor dem Auslesen zuerst spatial gefiltert, um das am Beugungsgittermosaik gebeugte Licht zu entfernen. Nur der Barcode wird nach der Filteranordnung auf einen Schirm sichtbar. Der Schirm wird entweder visuell oder mit einer CCD - Kamera (= Kamera mit einem "Charge-coupled-device") beobachtet.

Aus der CH-PS 653'160 ist ein Wertdokument mit maschinenlesbaren optischen Echtheitsmarkierungen bekannt. Das Dokument weist nur die aus Beugungsstrukturen bestehenden Echtheitsmarkierung auf, die aus aneinander gefügten Teilflächen mit vorbestimmten Beugungsstrukturen zusammen gesetzt sind. Es wird vorgeschlagen, ein grobes Relief für eine Beugungsstruktur auf viele Flächenteile aufzuteilen. Durch Zerschneiden und wieder Zusammenfügen der Echtheitsmarkierung kann jedoch der Informationsgehalt leicht verfälscht werden. Ein wichtiges Merkmal ist das statische, gleichzeitige Erfassen der Information aus der ganzen Echtheitsmarkierung, falls die ganze Fläche des Echtheitsmerkmals mit parallelem Licht bestrahlt wird.

Das Sicherheitsmerkmal kann erste Beugungselemente aufweisen, die sich gemäss der EP-A 360'969 von den umgebenden weiteren Beugungselementen nur durch ihren um 180° höheren Wert des Azimuts (Asymmetrie) unterscheiden. Mit solchen spiegelsymmetrischen Paaren aus den Beugungselementen kann ein Echtheitsmerkmal mit einer Information versehen werden. Ein derartiges Flächenmuster weist den gleichen Nachteil wie die CH-PS 653'160 auf.

Die Aufgabe der Erfindung ist ein Flächenmuster in Form eines beugungsoptischen Sicherheitsmerkmal zu schaffen, das eine einfach auszulesende Information zur Identifizierung des Flächenmusters besitzt und nicht oder sehr schwierig verfälschbar ist.

Die genannte Aufgabe wird erfindungsgemäss durch die Merkmale der Ansprüche 1 und 5 gelöst. Eine Verwendung des Flächenmusters wird in Anspruch 14 angegeben. Vorteilhafte Ausgestaltungen ergeben sich aus den abhängigen Ansprüchen.

Nachfolgend werden Ausführungsbeispiele der Erfindung anhand der Figuren näher erläutert.

Es zeigt
- Figur 1:: ein Flächenmuster,
- Figur 2a - d:: Flächenelemente,
- Figur 3:: ein Lesegerät mit dem Flächenmuster
- Figur 4:: ein linearer Flächenverband,
- Figur 5:: ein quadratisch begrenzter Flächenverband und
- Figur 6:: eine Anordnung von Schriftbildern im Flächenmuster.

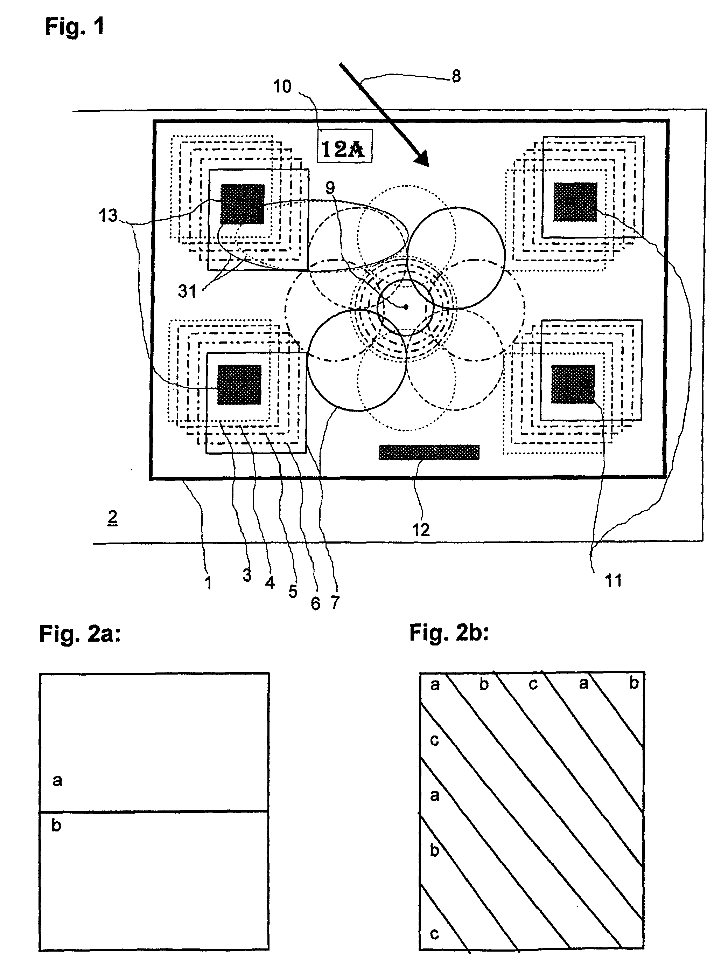

Die Figur 1 zeigt ein Flächenmuster 1, das als Sicherheitselement auf einem Dokument 2 angebracht ist. Das Flächenmuster 1 weist N visuell erkennbare Muster auf, die aus Flächenanteilen oder anderen graphischen Elementen mit beugungsoptisch wirksamen, mikroskopisch feinen Reliefstrukturen, ebenen Spiegelflächen oder mit absorbierenden oder streuenden Strukturen zusammengesetzt sind. N ist eine ganze Zahl > 0, für eindrucksvolle optische Bewegungseffekte wird N zwischen 6 und 30 gewählt. Ausführungen der N Muster sind in den eingangs erwähnten Patentschriften EP-A 105'099, EP-A 330'738, EP-A 375'833, EP-A 537'439 beschrieben. In der Zeichnung der Figur 1 sind aus zeichnerischen Erwägungen die N Muster durch Linien 3 bis 7 in verschiedener Gestalt (durch Punkte, Striche, Punkt - Strich usw.) dargestellt. In Wirklichkeit nimmt ein Beobachter, der das Flächenmuster 1 aus der Sehrichtung 8 erblickt, bei einer Drehung um die Normale zur Zeichenebene (dargestellt mit dem Punkt 9) des mit Tageslicht beleuchteten Flächenmusters 1, jeweils nur ein einziges der N Muster in brillanten Farben wahr, wobei sich in diesem Beispiel beim Uebergang von einem Muster zum nächsten die Lage der sichtbaren Quadrate und Kreise auf dem Flächenmuster 1 ändert bzw. Kreise mit dem Mittelpunkt 9 und sich ändernden Radien nacheinander sichtbar sind. Dieselben Bewegungseffekte weisen auch entsprechend gestaltete Schriftbilder 10 auf.

Die N Muster enthalten zusammen wenigstens ein unabhängiges, gemeinsames Flächenelement 11, das nicht Teil der N Muster ist. Eine Vielzahl dieser Flächenelemente 11 können nebeneinander, mit oder ohne Beabstandung, angeordnet sein und einen bandförmigen, linearen ersten Flächenverband 12 von der Höhe eines Flächenelementes 11 bilden. In einer andern Ausführung weist ein kompakter zweiter Flächenverband 13 die Form eines Vierecks (Quadrat, Rechteck, Rhombe) oder einer andern, beliebig begrenzten Flächenform auf. Nicht zusammenhängende, beliebig begrenzte Flächenelemente 11 können über das ganze Flächenmuster 1 verteilt oder in einer losen Gruppe angeordnet sein.

In der Figur 2a bis 2d sind Beispiele der Flächenelemente 11 gezeigt, wobei hier angemerkt ist, dass die gezeigten Flächenelemente 11 nur aus darstellerischen Gründen als Rechtecke gezeichnet sind. Das Flächenelement 11 ist in Flächenteile 14, 15 unterteilt und weist eine von den N Mustern unabhängige, vorbestimmt strukturierte Anordnung der Flächenteile 14, 15 auf, die mit dem unbewaffneten Auge nicht erkennbar ist, d.h. wenigstens eine Abmessung der Flächenteile 14, 15 ist kleiner als 0,3 bis 0,4 mm. Jedes Flächenteil 14 bzw. 15 ist mit einer einzigen, mikroskopisch feinen Beugungsstruktur oder mit einer Struktur belegt, die eine absorbierende oder streuende Eigenschaften besitzt, oder ein ebener Spiegel ist. Nachstehend werden die nicht näher spezifizierten Strukturen der Flächenteile 14, 15 mit "Teilstruktur" bezeichnet. Das Flächenmuster 11 in Figur 2a ist in zwei gleich grosse Flächenteile 14, 15 unterteilt. Das Flächenteil 14 ist mit der Teilstruktur "a" belegt, der Flächenteil 15 mit der Teilstruktur "b". Die Grösse des Flächenelementes 11 ist beispielsweise 0,5 mm breit und 0,6 bis 0,8 mm hoch. Für den Betrachter des Flächenmusters 1 (Figur 1) sind diese Flächenteile 14, 15, wenn sie mit einer Beugungsstruktur belegt sind, wegen der hohen Intensität des an der Beugungsstruktur gebeugten Lichtes als auffällige Farbflecken sichtbar und könnten den Bildeindruck des jeweils sichtbaren Musters stören. Beschädigungen der Oberfläche des Flächenelementes 1 innerhalb des Flächenteils 14 bzw. 15 kann die Leuchtkraft der Teilstruktur empfindlich reduzieren.

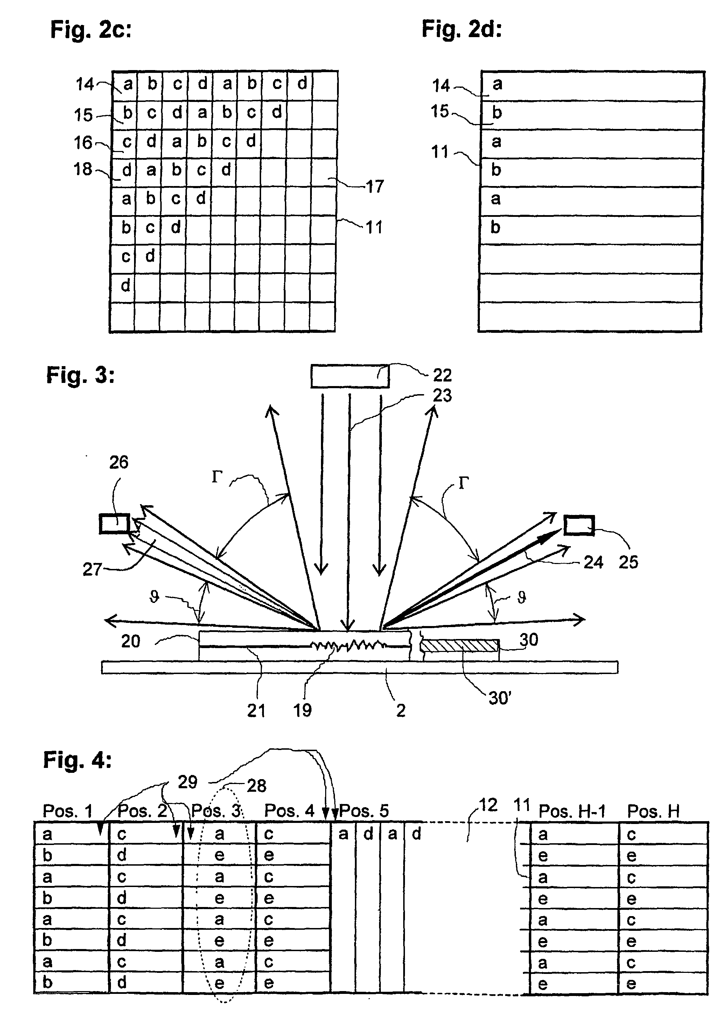

Werden die Flächenelemente 11 feiner unterteilt, z.B. gemäss den Figuren 2b, 2c, 2d, nimmt für den Betrachter die Intensität des Flächenelementes 11 ab. In der Figur 2b ist das Flächenelement 11 mit einer Anordnung der schräg gestellten bandförmigen Flächenteile 14, 15, 16 unterteilt. Die Teilstrukturen "a", "b" und "c" sind den Flächenteilen 14, 15, 16 zugeordnet und bilden eine zyklisch wechselnde Folge abc abc abc. Die kleinere Abmessung der einzelnen Flächenteile 14, 15, 16 liegt im Bereich von 50 µm. Sind die Teilstrukturen "a", "b" und "c" als Beugungsstrukturen ausgebildet, unterscheiden sie sich in wenigstens einem Gitterparameter, so dass der Beobachter meist eine Mischfarbe mit weniger Brillianz erblickt. In der Figur 2c ist das Flächenelement 11 in regelmässige Pixel 17 unterteilt, deren grösste Abmessung 0,3 mm nicht überschreitet. Diese Anordnung der zyklisch vertauschten Teilstrukturen "a", "b", "c" und "d" in den Flächenteilen 14, 15, 16, 18 ist eine Abwandlung der Anordnung in der Figur 2b, die besser in die eines der bekannten Flächenmuster (EP-A 375'833) integrierbar ist. Die Figur 2d weist eine Anordnung der bandförmigen, wenigstens 30 µm breiten Flächenteile 14, 15 mit den beiden zyklisch vertauschten Teilstrukturen "a" und "b" auf. Die hier gezeigten Beispiele der Anordnung der Teilstrukturen im Flächenelement 11 und die Art der Unterteilung des Flächenelementes 11 sind eine nicht vollständige Auswahl.

In der Figur 3 ist das Flächenmuster 1 (Figur 1) auf das Dokument 2 geklebt, wobei eine Klebeschicht zwischen dem Laminat 20 und dem Dokument 2 die Haftung vermittelt. Ein Relief 19 des Flächenmusters 1 umfasst die Flächenanteile mit den mikroskopisch feinen Reliefstrukturen und mit absorbierenden oder streuenden Strukturen oder mit ebenen Spiegeln der N Muster sowie die Teilstrukturen der Flächenelemente 11. Das Relief 19 ist in ein Laminat 20 aus transparentem Kunststoff eingebettet. Zu Erhöhung der optischen Wirksamkeit kann das Relief 19 mit einer Reflexionsschicht 21 überzogen sein.

Im Bereich der Flächenelemente 11 ist anstelle der feinen Unterteilung in Flächenteile 14 (Figur 2a), 15 (Figur 2a), 16 (Figur 2b) auch ein aus der WO 97/27504 bekannte Reliefstruktur 19 verwendbar, wobei die beugende Reliefstruktur 19 aus einer Ueberlagerung entsprechender einfacher Beugungsgitter erzeugt ist und die gleichen Beugungseigenschaften aufweist, wie das fein unterteilte Flächenelement 11.

Anstelle der durch Prägen vervielfältigten Reliefs 19 und der daher völlig identischen Flächenmuster 1 lassen sich ähnliche Flächenmuster 1 in der Technik der eingangs erwähnten Volumenhologramme 30, beispielsweise auch als Einzelstücke, anfertigen; insbesondere eignet sich diese Technik für die Herstellung individueller Sicherheitsmerkmale mit individueller, maschinell auslesbarer Information. Das Volumenhologramm 30 wird als Muster von Interferenzen kohärenter Referenz- und Objektstrahlen in einer im Vergleich zur Lichtwellenlänge dicken lichtempfindlichen Schicht, der "Folie", aufgezeichnet, wobei beim Entwicklen der belichteten lichtempfindlichen Schicht in der Folie das Muster der Interferenzen als lokale Aenderungen des Brechungsindex in Form von eng gestaffelten, jalousieförmig angeordneten Ebenen (= "fringes") aufweist. Diese Fringes wirken als lichtbeugende Struktur 30'. Da keine Reflexionsschicht 21 benötigt wird, weisen die Volumenhologramme 30 eine inhärente Transparenz auf. Diese Ausführung des Flächenmusters 1 bietet den Vorteil, dass nach dem Aufkleben des Sicherheitsmerkmals auf das Dokument 2 Bilder und Text oder andere Indicia des Dokuments 2 durch das Volumenhologramm 30 hindurch sichtbar bleiben.

Durch Mehrfachbelichtungen unter verschiedenen Bedingungen bei der Herstellung des Volumenhologramms 30 können im Bereich der Flächenelemente 11 im gleichen Volumen mehrere Systeme von "fringes" erzeugt werden, die analog zu den aus der WO 97/27504 bekannten, überlagerten Reliefstrukturen wirken.

Eine maschinelle Identifikation des Dokuments 2 in einem Lesegerät, das die EP-A-0 986 795 beschreibt, ist besonders bei Banknoten und Ausweisen aller Art vorteilhaft. Um ein sicheres optisch maschinelles Auslesen zu ermöglichen, weisen die Beugungsstrukturen der Flächenelemente 11 (Figur 1) und der aus diesen zusammengesetzten Flächenverbänden 12 (Figur 1), 13 (Figur 1) wenigstens eine Spatialfrequenz f_{B} auf, die nicht in den mikroskopisch feinen Reliefstrukturen der N Muster verwendet wird oder ein ganzzahliges Vielfaches der für die Reliefstrukturen verwendeten Spatialfrequenzen f_{R} ist, also gilt Spatialfrequenz f_{B} ≠ m•f_{R} für m = 1, 2,3, ... ;die Zahl m ist die Ordnungszahl des Beugungseffekts. Wird im Lesegerät gebeugtes Licht der k-ten Beugungsordnung erfasst, so wird die Selektion der Spatialfrequenz f_{B} weiter eingeschränkt, da auch für diese k-te Beugungsordnung die Ausschliessregel k• f_{B} ≠ m•f_{R} für m = 1, 2, 3, ... und k = 1, 2, ... gelten muss. Die Spatialfrequenzen f_{B} und f_{R} sind aus dem Bereich 0 bis etwa 3500 Linien/mm, d.h. von einem ebenen Spiegel bis zu Gitterstrukturen, die gerade noch in den Kunststoff des Laminats 20 abgeformt werden können.

Es ist denkbar, neben den getrennten Spatialfrequenzen f_{B} und f_{R} auch getrennte Azimutbereiche ϕ_{B}, ϕ_{R} für die Beugungsstrukturen der Flächenelemente 11 und die Reliefstrukturen der N Muster vorzusehen.

Im Lesegerät erzeugt eine Lichtquelle 22 monochromatisches Licht 23 mit einer vorbestimmten Wellenlänge λ aus dem infraroten oder sichtbaren Bereich des Spektrums der elektromagnetischen Wellen. Das auf das Flächenmuster 1 einfallende Licht 23 wird an den vielen Flächenteilen 14 (Figur 2), 15 (Figur 2), 16 (Figur 2), 18 (Figur 2) mit den Beugungsstrukturen der Spatialfrequenz f_{B} gebeugt; in diesem Beispiel in der ersten Beugungsordnung (m = 1). In der Figur 3 gibt ein Pfeil 24 die Richtung des an den Beugungsstrukturen gebeugten Lichts der Wellenlänge λ an. Die Beugungsstrukturen der Flächenteile 14, 15, 16, 18 können sich durch den Azimut ϕ (0° ≤ ϕ < 360°) und das Profil der Beugungsstruktur (symmetrische und asymmetrische Gitter, Sinus -, Rechteck -, Dreieck -, Sägezahnprofil mit (f_{B})⁻¹ ≤ 3•λ oder (f_{B})⁻¹> 3•λ) unterscheiden. Das an den Flächenteilen 14, 15, 16, 18 mit dem gleichen Azimut ϕ der Beugungsstruktur gebeugte Licht wird symmetrisch zum einfallenden Licht 23 abgelenkt und fällt auf die Photodetektoren 25, 26. Das einfallende Licht 23 und die beiden, symmetrisch zum einfallenden Licht 23 angeordneten Photodetektoren 25, 26 legen eine Beugungsebene 100 mit dem Azimut Θ der zu detektierenden Flächenteilen 14, 15, 16, 18 fest, welche gleichzeitig die Zeichenebene in der Figur 3 ist.

Die Reliefstrukturen der N Muster besitzen andere Spatialfrequenzen und für jedes Muster einen anderen Azimut, so dass das an den N Mustern gebeugte einfallende Licht 23 in andere durch Kegelflächen begrenzte Winkelbereiche Γ, ϑ gelenkt wird und die Photodetektoren 25, 26 nicht erreicht. Diese Kegelflächen besitzen als gemeinsame Achse die Richtung der nullten Beugungsordnung; in der Zeichnung der Figur 3 ist diese Achse antiparallel zum einfallenden Licht 23.

Das Lesegerät in der oben genannten Anmeldung EP-A-0 986 795 kann für den gleichen Azimut Θ (0° ≤ Θ < 180°) der Beugungsebene 100, der eine Teilstruktur zugeordnet ist, wenigstens drei Zustände des gebeugten Lichts unterscheiden, nämlich gebeugt am symmetrischen Gitter oder an einem der beiden asymmetrischen Gittern mit den Azimuten ϕ und ϕ + 180°. Weist hingegen die Teilstruktur eine absorbierende oder streuende Eigenschaft auf oder ist sie ein ebener Spiegel, ergibt sich ein weiterer vom Lesegerät erkennbarer Zustand "keine Beugungsstruktur". Somit bestimmen die Flächenteile 14, 15, 16, 18 mit der gleichen Teilstruktur wenigstens vier Zustände. Enthält beispielsweise das Flächenelement 11 Flächenteile 14, 15 mit zwei verschiedene Teilstrukturen "a", "b" (Figuren 2a, 2d), sind mit dem Flächenelement 11, das als Informationselement dient, 16 verschiedene Zustände darstellbar. Beizufügen ist, dass in diesem Fall im Lesegerät je zwei Photodetektoren 25, 26 in den beiden Beugungsebenen 100 entsprechend den Parametern der beiden Teilstrukturen "a" und "b" anzuordnen sind. Mit den Informationselementen kann die Identität des Flächenmusters 1 eines Dokuments 2 verschlüsselt werden und mit dem Lesegerät sicher erkannt werden. Ist in einem Flächenelement 11, mit T die Anzahl der in den Flächenteilen 14, 15, 16, 18 verwendeten unterschiedlichen Teilstrukturen bezeichnet, die je Z Zustände definieren, weist das Flächenelement 11 (als Informationselement 29) E verschiedene Zustände auf, wobei E = Z^{T} ist. Umfasst der Flächenverband 12 (Figur 1) bzw. 13 (Figur 1) mehrere Flächenelemente 11, z.B. die Anzahl F, sind E^{F} verschiedene Zustände der Information für eine optisch maschinell auslesbare Kodierung des Flächenmusters 1 theoretisch nutzbar.

Das von den Photodetektoren 25, 26 empfangene Licht hängt unter anderem von der Gesamtfläche der Flächenteile 14 bzw. 15 usw. mit der gleichen Teilstruktur innerhalb des Flächenelements 11 ab. In einem Beispiel gemäss Figur 2d betrug die Abmessung des Flächenelements 11 mit zwei Teilstrukturen in der Breite 0,5 mm und in der Höhe 1,2 mm oder für die Gesamtfläche jeder Teilstruktur 0,30 mm². Die Teilstruktur war in der Höhe in 50 µm hohe Flächenteile 14, 15 eingeteilt. Dies ergab 12 Flächenteile 14 mit der Teilstruktur "a" und gleich viele Flächenteile 15 mit der Teilstruktur "b". Der Vorteil dieser Anordnung liegt in der praktisch unmöglichen mechanischen Trennung der Flächenteile 14 und 15 und verhindert daher ein in betrügerischer Absicht aus Schnipseln neu gestaltete Zusammenstellung eines Flächenelements 11.

Wie aus der Figur 3 ersichtlich, weist die in der Teilstruktur verwendete Spatialfrequenz f_{B} zu den Spatialfrequenzen f_{R} der lichtbeugenden Reliefstrukturen wenigstens einen minimalen Spatialfrequenzabstand Δf auf dargestellt durch den Pfeil 24 in der Lücke zwischen den beiden begrenzenden Kegelflächen der beiden Winkelbereiche Γ, ϑ. Der Spatialfrequenzabstand Δf beträgt bei einer typischen Spatialfrequenz f_{B}, f_{R} von 500 bis 1000 Linien/mm etwa Δf= 20 bis 100 Linien/mm.

Ist das Dokument 2 ein dünnes Papier, z.B. wie bei Banknoten, folgt das Laminat 20 der rauhen und oft auch zerknitterten Papieroberfläche. Das Licht 23 fällt dann lokal nicht mehr senkrecht auf das Flächenmuster 1 ein, und die Richtung des Pfeils 24 weicht von der Sollrichtung ab und kann möglicherweise nicht mehr den Photodetektor 25 bzw. 26 erreichen. Um diese Effekte zu kompensieren, weist die Spatialfrequenz f_{B} der Beugungsstruktur innerhalb des Flächenteils 14, 15, 16 bzw. 18 eine Modulation auf, d.h. die Spatialfrequenz f_{B} weist keinen Einzelwert auf sondern variiert innerhalb enger Grenzwerte kontinuierlich oder stufenweise, beispielsweise zwischen 500 Linien/mm und 520 Linien/mm bei einer Nominalfrequenz von f_{B} = 510 Linien/mm. Das gebeugte Licht ist nicht mehr parallel sondern leicht divergent, wie dies der schattierte Bereich 27 andeutet. Damit das von den Photodetektoren 25, 26 empfangene gebeugte Licht sicher von den Teilstrukturen stammt, muss für alle Spatialfrequenzen f_{B} des Modulationsbereichs (Bandbreite) die Ausschliessregel k• f_{B} ≠ m•f_{R} gelten.

In der Figur 4 ist eine Ausführung des linearen Flächenverbands 12 dargestellt. In einem Beispiel ist der lineare Flächenverband 12 eine Folge der H aneinander gereihter Flächenelemente 11. Sie weisen die in der Figur 2d gezeigte Anordnung der Flächenteile 14, 15 oder eine um 90° gedrehte Anordnung (Pos. 5) auf. Die in der Figur 4 verwendeten Parameter der Teilstrukturen a bis e sind in der Tabelle 1 aufgeführt. Die Teilstrukturen "a" und "c" teilen die Flächenelemente 11 als in gerade und ungerade Positionen eingereihte ein. Die Teilstrukturen "d" und "e" stellen die Information "logisch 0" und "logisch 1" dar. Das Bezeichnen der Flächenelemente 11 mit ihrer Position im Flächenverband 12 weist den Vorteil auf, das weitgehend eine Verfälschung der im Flächenverband 12 enthaltenen Information durch Zerschneiden des Flächenverbands 12 und erneutes Zusammensetzen verhindert.

**Tabelle 1:**

| Teilstruktur | a | b | c | d | e |
|---|---|---|---|---|---|
| Spatialfrequenz f_{B} | 1000 pro mm | Spiegelebene | 1000 pro mm | 600 pro mm | 600 pro mm |
| Azimut ϕ | 180° | - - - | 0° | 180° | 0° |
| Funktion | ungerades Bit | Startzeichen | gerades Bit | logisch 0 | logisch 1 |

Der Flächenverband 12 muss mit einem sequentiell ablesenden Lesegerät optisch abgetastet werden, da die Information auch im Stellenwert der Flächenelemente 11 steckt, d.h. in ihrer Position in Bezug auf das Startzeichen (Pos. H=1). Das Lesegerät in der Zeichnung der Figur 3 benötigt nur eine einzige Beugungsebene 100, in der symmetrisch zum einfallenden Licht 23 zwei Paare der Photodetektoren 25, 26 angeordnet sind. Das an den beiden Teilstrukturen mit den Spatialfrequenzen 600 Linien/mm und 1000 Linien/mm gebeugte Licht unterteilt den für das gebeugte Licht der N Muster verfügbare Halbraum in drei Bereiche und nicht in zwei, wie gezeichnet.

Das einfallende Licht 23 wird mit einem Kollimator (EP-A 360'969) so verformt, dass gemäss der Figur 4 auf dem Flächenelement 11 beispielsweise eine beleuchtete Fläche 28 entsteht, deren Abmessung längs des Flächenverbands 12 wenigstens 50 % der Breite eines Flächenelements 11 beträgt. Zum Auslesen wird das einfallende Licht 23 längs des linearen Flächenverbands 12 so geführt, dass ein Flächenelement 11 nach dem andern ausgelesen wird. Das Startzeichen ermöglicht die eindeutige Zuordnung der Informationselemente 29 im Flächenverband 12. Der lineare Flächenverband 12 enthält in diesem Beispiel die Information "Start/010 ... 11". Zusätzlich kann die Pos. H als Stopzeichen ausgestaltet werden, wobei die Teilstrukturen "b" und "c" dem Lesegerät das Stopzeichen eindeutig signalisieren.

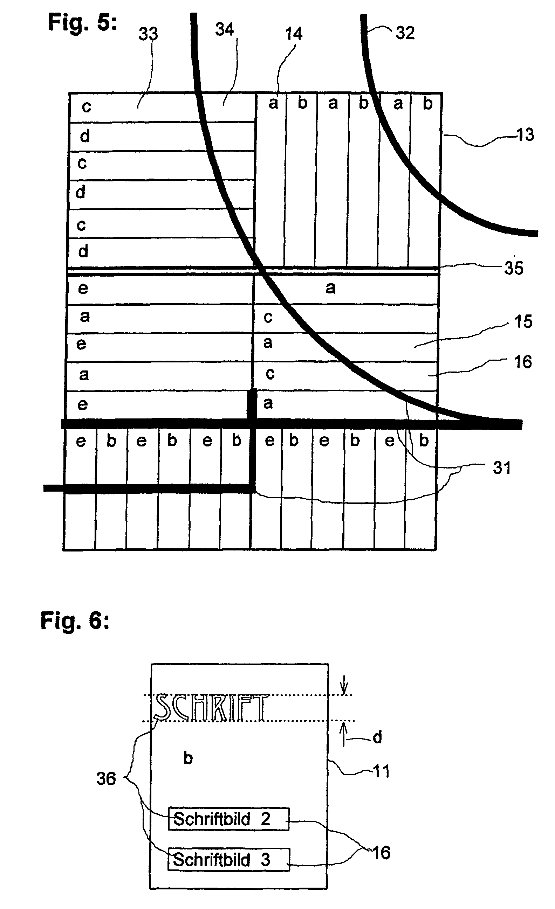

Der kompakte zweite Flächenverband 13 (Figur 1) ist in der Figur 5 beispielhaft gezeigt. Der Flächenverband 13 setzt sich hier aus sechs Flächenelementen 11 (Figur 2d) zusammen, die mit den Anordnungen der Flächenteile 14 (Figur 2d), 15 (Figur 2d) unterteilt sind, wobei die fünf Teilstrukturen in den Flächenelementen 11 zu {a, b}, {a, c}, {a, e}, {b, e} und {c, d} kombiniert sind. Jede Teilstruktur legt einen von wenigstens von vier Zuständen fest. Wenn der ganze Flächenverband 13 gleichzeitig beleuchtet ist, erkennt ein Lesegerät mit drei Beugungsebenen 100 (Figur 3) und mit fünf Paaren der Photodetektoren 25 (Figur 3), 26 (Figur 3) den durch die gewählten Teilstrukturen vorbestimmten Zustand aus 4⁵ = 1024 Zuständen. Die Tabelle 2 enthält Parameter für einen vorbestimmten Zustand als Beispiel.

Ohne von der erfinderischen Idee abzuweichen, können sich graphische Linienelemente 31, 32 der N Muster über die Fläche der Flächenelemente 11 erstrecken und es in die beiden Unterelemente 33 und 34 zerschneiden. Die Zugehörigkeit zum Flächenelement 11 ist durch die Anordnung der Teilstrukturen bestimmt. Aneinandergrenzende Flächenelemente können auch mittels eines Leerstreifens 35 beabstandet sein. Solche Linienelemente 31, 32 sind meist äusserst schmal (typ. 30 bis 100 µm) und stören daher das Auslesen der Flächenelemente 1 oder, wie die Figur 1 zeigt, der Flächenverbände 12, 13 nicht.

**Tabelle 2:**

| Teilstrukturen | a | b | c | d | e |
|---|---|---|---|---|---|
| Azimutwinkel der Beugungsebene | 0° | 90° | 0° | 90° | 135° |
| Azimutwinkel ϕ | 180° | 270° | 0° | - - - | 135° |
| Beugungsgitter | asymmetrisch | asymmetrisch | symmetrisch | Spiegel | asymmetrisch |
| Spatialfrequenz f_{B} | 600 pro mm | 600 pro mm | 900 pro mm | 900 pro mm | 900 pro mm |

Anstelle einfacher kreisringförmiger oder bandförmiger Streifen kann, wie in der Figur 6 gezeigt ist, für die Flächenteile 14, 15, 16, 17, 18 mit Vorteil auch ein Schriftbild 36 aus alphanumerischen Zeichen gewählt werden. Die alphanumerischen Zeichen des Schriftbildes 36 können beispielsweise die Teilstruktur "a" aufweisen und der Hintergrund der Zeichen die Teilstruktur "b". In einer anderen Ausführung sind benachbarte Schriftbilder 36 und ihr Hintergrund durch das Flächenteil 16 mit einer dritten Teilstruktur "c" getrennt. Solche Schriftbilder 36 mit einer Höhe d ≤ 0,3 mm und deren Verwendung sind in der EP-A 330'738 beschrieben.

Die wichtigsten Vorteile der hier vorgestellten Kodierung mittels eines Flächenverbands 12, 13 oder einem einzigen Flächenelement 11 sind hier nochmals zusammengefasst:
- Kratzer, Dreck, Oberflächenfehler usw. machen sich kaum noch bemerkbar, da sich die informationstragenden Teilstrukturen, ohne auffällig zu wirken, über ein grösseres Flächenelement 11 verteilen.
- Die Information ist ausschliesslich mit vorbestimmten Spatialfrequenzen f_{B} kodiert, so dass der Leser die Information auch aus dem Flächenmuster 1 problemlos auslesen kann.
- Grosse Toleranz gegen Positionierungsfehler des Flächenmusters 1 relativ zum Lesegerät.

## Patentansprüche

1. Flächenmuster mit N visuell erkennbaren Mustern aus Flächenanteilen mit beugungsoptisch wirksamen, mikroskopisch feinen Reliefstrukturen, ebenen Spiegelflächen oder mit absorbierenden oder streuenden Strukturen, deren optische Wirksamkeit durch eine Reflexionsschicht (21) auf den Strukturen (19) bestimmt ist und die in ein Laminat (20) aus Kunststoff eingebettet sind, mit wenigstens einem von den N Mustern unabhängigen, in gleich viele Flächenteile (14; 15; 16; 17; 18) verschiedener Teilstrukturen unterteiltem Flächenelement (11), wobei jedes der Flächenteile (14; 15; 16; 17; 18) mit einer Teilstruktur belegt ist, die eine mikroskopisch feine Beugungsstruktur oder eine Struktur mit absorbierenden oder streuenden Eigenschaften enthält oder ein ebener Spiegel ist und sich die als Beugungsstrukturen ausgebildeten Teilstrukturen untereinander um wenigstens einen Gitterparameter unterscheiden,
**dadurch gekennzeichnet,**
**dass** das Flächenelement (11) so in die zyklisch sich abwechselnden Flächenteile (14; 15; 16; 17; 18) mit wenigstens einer Abmessung kleiner als 0,4 mm unterteilt ist, dass eine von den N Mustern unabhängige, vorbestimmt strukturierte Anordnung der Flächenteile (14; 15; 16; 17; 18) im Flächenelement (11) mit dem unbewaffneten Auge nicht erkennbar ist,
**dass** die Spatialfrequenz f_{B} jeder als Beugungsstruktur ausgebildeten Teilstruktur zu den Spatialfrequenzen f_{R} der lichtbeugenden Reliefstrukturen in den Flächenanteilen einen Spatialfrequenzabstand ± Δf im Bereich von 20 bis 100 Linien pro mm aufweist.

2. Flächenmuster nach Anspruch 1, **dadurch gekennzeichnet, dass** jedes Flächenelement (11) in zwei Teilflächen (14; 15; 16; 17; 18) in Pixel (17) oder Bänder (14; 15; 16; 18) unterteilt ist, wobei zwei der Teilstrukturen a, b, c usw. paarweise zyklisch vertauscht sind.

3. Flächenmuster nach Anspruch 1 oder 2, **dadurch gekennzeichnet, dass** die Spatialfrequenz f_{B} der Teilstrukturen a, b, c moduliert ist und innerhalb einer vorbestimmten Bandbreite kontinuierlich oder stufenweise variiert.

4. Flächenmuster nach einem der Ansprüche 1 bis 3, **dadurch gekennzeichnet, dass** die mikroskopisch feinen Beugungsstrukturen der Flächenteile (14; 15; 16; 17; 18) im Flächenelement (11) wenigstens eine Spatialfrequenz f_{B} und die beugungsoptisch wirksamen, mikroskopisch feinen Reliefstrukturen der N Muster Spatialfrequenzen f_{R} aufweisen, wobei kein ganzahliges Vielfache der Spatialfrequenzen f_{B} ein ganzahliges Vielfaches einer der Spatialfrequenzen f_{R} ist.

5. Flächenmuster mit N visuell erkennbaren Mustern in Form eines Volumenhologramms (30) gespeichert in einer Folie mit beugungsoptisch wirksamen, mikroskopisch feinen Strukturen (30') gebildet aus lokalen Aenderungen des Brechungsindex im Material der Folie, mit wenigstens einem von den N Mustern unabhängigen Flächenelement (11), wobei die feinen Strukturen (30') des Flächenelements (11) mit wenigstens einer Spatialfrequenz f_{B} so angeordnet sind, dass ein von den N Mustern unabhängiges Beugungsmuster in einem kleinen, der Spatialfrequenz f_{B} zugeordneten Bereich (27) des Beugungswinkels entsteht,
**dadurch gekennzeichnet,**
**dass** die feinen Strukturen (30') der N visuell erkennbaren Mustern solche Spatialfrequenzen f_{R} aufweisen, die sich von der Spatialfrequenz f_{B} um einen Spatialfrequenzabstand ±Δf im Bereich von 20 bis 100 Linien pro mm unterscheiden und
**dass** das Volumen des Flächenelementes (11) als Teilstrukturen eine Überlagerung von wenigstens zwei feinen Strukturen (30') mit wenigstens einer Spatialfrequenz f_{B} und mit verschiedenen Werten ϕ₁, ϕ₂ des Azimuts enthält.

6. Flächenmuster nach Anspruch 5, **dadurch gekennzeichnet, dass** die Spatialfrequenzen f_{B} in der Struktur (30') der Flächenelemente (11) keine ganzahligen Vielfache der einer der Spatialfrequenzen f_{R} der N visuell erkennbaren Mustern ist.

7. Flächenmuster nach einem der Ansprüche 1 bis 6, **dadurch gekennzeichnet, dass** die Flächenelemente (11) Informationselemente sind, dass jede Teilstruktur der Flächenelemente (11) einen aus vier Zuständen festlegt und dass eine Vielzahl der Flächenelemente (11) einen optischen, maschinell auslesbaren Kode bilden.

8. Flächenmuster nach Anspruch 7, **dadurch gekennzeichnet, dass** innerhalb der N visuell erkennbaren Mustern die Flächenelemente (11) nicht zusammenhängend angeordnet sind und eine lose Gruppe bilden.

9. Flächenmuster nach Anspruch 7, **dadurch gekennzeichnet, dass** die Flächenelemente (11) gleich gross und zu einem bandförmigen linearen Flächenverband (12) von der Höhe eines Flächenelementes (11) angeordnet sind.

10. Flächenmuster nach Anspruch 9, **dadurch gekennzeichnet, dass** im Flächenverband (12) eine Folge der Flächenelemente (11) in den Flächenteilen (14; 15) nur die beiden Teilstrukturen aus einem der vier Paare, gebildet aus den Teilstrukturen, { a, b }, {c, d }, { a, e } oder {c, e } aufweisen und dass das Teilstrukturpaar jedes Flächenelementes (11) die Position des Flächenelementes (11) im Flächenverband (12) und ein Bit der logischen Information festlegt.

11. Flächenmuster nach Anspruch 7, **dadurch gekennzeichnet, dass** die Flächenelemente (11) wenigstens einen kompakten Flächenverband (13) innerhalb der N visuell erkennbaren Mustern bilden, der die Form eines Vierecks oder eine andere, beliebig begrenzte Flächenform aufweist.

12. Flächenmuster nach einem der vorhergehenden Ansprüche , **dadurch gekennzeichnet, dass** wenigstens eines der Flächenteile (14; 15; 16; 17; 18) mit der einen Teilstruktur die Form eines Schriftbilds (36) aus alphanumerischen Zeichen auf dem Hintergrund mit der andern Teilstruktur aufweist.

13. Flächenmuster nach einem der vorhergehenden Ansprüche, **dadurch gekennzeichnet, dass** sich wenigstens ein graphisches Element (31; 32) von wenigstens einem der N Muster über ein Flächenelement (11) erstreckt und das Flächenelement (11) in Unterelemente (33; 34) teilt.

14. Verwendung eines Flächenmusters nach einem der vorhergehenden Ansprüche als Sicherheitselement für ein Dokument (2) und zur Identifikation des Dokuments (2) in einem Lesegerät.

## Claims

1. Surface pattern having N visually recognizable patterns of surface portions having optically diffractive, microscopically fine relief structures, plane mirror faces or having absorbing or scattering structures, the optical performance of which is determined by a reflection layer (21) on the structures (19) and which are embedded in a plastic laminate (20), having at least one surface element (11) which is independent of the N patterns and subdivided into an equal number of surface parts (14; 15; 16; 17; 18) of different substructures, each of the surface parts (14; 15; 16; 17; 18) being occupied by a substructure which contains a microscopically fine diffraction structure or a structure having absorbing or scattering properties, or is a plane mirror, and the substructures designed as diffraction structures differ from one another by at least one grating parameter, **characterized in that** the surface element (11) is subdivided into the cyclically alternating surface parts (14; 15; 16; 17; 18) with at least one dimension smaller than 0.4 mm such that an arrangement of the surface parts (14; 15; 16; 17; 18) which is independent of the N patterns and has a predetermined structure is not recognizable in the surface element (11) to the naked eye, and **in that** the spatial frequency f_{B} of each substructure designed as diffraction structure has a spatial frequency difference ±Δf in the range from 20 to 100 lines per mm from the spatial frequencies f_{R} of the optically diffracting relief structures in the surface portions.

2. Surface pattern according to Claim 1, **characterized in that** each surface element (11) is subdivided in two partial surfaces (14; 15; 16; 17; 18) into pixels (17) or bands (14; 15; 16; 18), two of the substructures a, b, c, etc. being cyclically permuted in pairs.

3. Surface pattern according to Claim 1 or 2, **characterized in that** the spatial frequency f_{B} of the substructures a, b, c is modulated and varies continuously or in steps inside a predetermined bandwidth.

4. Surface pattern according to one of Claims 1 to 3, **characterized in that** the microscopically fine diffraction structures of the surface parts (14; 15; 16; 17; 18) in the surface element (11) have at least one spatial frequency f_{B}, and the optically diffractive, microscopically fine relief structures of the N patterns have spatial frequencies f_{R}, no integer multiple of the spatial frequencies f_{B} being an integer multiple of one of the spatial frequencies f_{R}.

5. Surface pattern having N visually recognizable patterns in the form of a volumetric hologram (30) stored in a film having optically diffractive, microscopically fine structures (30') formed from local changes in the refractive index in the material of the film, having at least one surface element (11) independent of the N patterns, the fine structures (30') of the surface element (11) being arranged with at least a spatial frequency f_{B} so as to produce a diffraction pattern independent of the N patterns in a small region (27), assigned to the spatial frequency f_{B}, of the diffraction angle, **characterized in that** the fine structures (30'), of the N visually recognizable patterns have such spatial frequencies f_{R} and differ from the spatial frequency f_{B} by a spatial frequency difference ±Δf in the range from 20 to 100 lines per mm, and **in that** the volume of the surface element (11) contains as substructures a superposition of at least two fine structure (30') with at least a spatial frequency f_{B} and having different values ϕ_{1,} ϕ₂ of the azimuth.

6. Surface pattern according to Claim 5, **characterized in that** the spatial frequencies f_{B} in the structure (30') of the surface elements (11) is not an integer multiple of one of the spatial frequencies f_{R} of the N visually recognizable patterns.

7. Surface pattern according to one of Claims 1 to 6, **characterized in that** the surface elements (11) are information elements, **in that** each substructure of the surface elements (11) fixes one of four states, and **in that** a multiplicity of the surface elements (11) form an optical, machine-readable code.

8. Surface pattern according to Claim 7, **characterized in that** the surface elements (11) are not arranged coherently inside the N visually recognizable patterns and form a loose group.

9. Surface pattern according to Claim 7, **characterized in that** the surface elements (11) are equally large and are arranged to form a band-shaped linear surface assembly (12) of the height of a surface element (11).

10. Surface pattern according to Claim 9, **characterized in that** in the surface assembly (12) a sequence of the surface elements (11) in the surface parts (14; 15) have only the two substructures from one of the four pairs, formed from the substructures, {a, b,} {c, d}, {a, e} or {c, e}, and **in that** the substructure pair of each surface element (11) fixes the position of the surface element (11) in the surface assembly (12) and one bit of the logic information.

11. Surface pattern according to Claim 7, **characterized in that** the surface elements (11) form at least one compact surface assembly (13) inside the N visually recognizable patterns, which assembly has the form of a quadrilateral or another surface shape of arbitrary delimitation.

12. Surface pattern according to one of the preceding claims, **characterized in that** at least one of the surface parts (14; 15; 16; 17; 18) with one substructure has the form of an inscription (36) of alphanumeric characters on the background with the other substructure.

13. Surface pattern according to one of the preceding claims, **characterized in that** at least one graphical element (31; 32) of at least one of the N patterns extends over a surface element (11) and divides the surface element (11) into subelements (33; 34).

14. Use of a surface pattern according to one of the preceding claims as a security element for a document (2) and for identifying the document (2) in a reading instrument.

## Revendications

1. Modèle de surface avec N modèles identifiables de parties de surface avec des structures en relief efficaces au plan de l'optique de diffraction et fines au plan microscopique, des surfaces de miroir planes ou avec des structures absorbantes ou diffusantes, dont l'efficacité optique est déterminée par une couche réfléchissante (21) sur les structures (19) et qui sont intégrées dans un aggloméré stratifié (20) en synthétique, avec au moins un élément de surface (11) indépendant des N modèles, subdivisé en autant de parties de surface (14 ; 15 ; 16 ; 17; 18) de structures partielles différentes, chacune des parties de surfaces (14 ; 15 ; 16 ; 18) étant occupée avec une structure partielle, qui contient une structure de diffraction fine au plan microscopique ou une structure avec des propriétés absorbantes ou diffusantes ou est un miroir plan et des structures partielles conçues comme des structures de diffraction se différenciant entre elles d'au moins un paramètre de réseau,
**caractérisé en ce que** l'élément de surface (11) est subdivisé ainsi entre les parties de surface (14 ; 15 ; 16 ; 17 ; 18) alternant de façon cyclique avec au moins une dimension inférieure à 0,4 mm, **en ce qu'**un agencement, indépendant des N modèles et structuré de façon prédéfinie, des parties de surface (14 ; 15 ; 16 ; 17 ; 18) dans l'élément de surface (11) n'est pas identifiable à l'oeil non exercé,
**en ce que** la fréquence spatiale f_{B} de chaque structure partielle conçue comme une structure de diffraction présente par rapport aux fréquences spatiales f_{B} des structures en relief de diffraction de lumière dans les parties de surface une distance de fréquence spatiale ± **Δf dans la plage de** 20 à 100 lignes par mm.

2. Modèle de surface selon la revendication 1, **caractérisé en ce que** chaque élément de surface (11) est subdivisé en deux surfaces partielles (14; 15 ; 16 ; 17 ; 18) en pixels (17) ou bandes (14 ; 15 ; 16 ; 18), deux des structures partielles a, b, c, etc., étant permutées par paire et de façon cyclique.

3. Modèle de surface selon la revendication 1 ou 2, **caractérisé en ce que** la fréquence spatiale f_{B} des structures partielles a, b, c est modulée et varie de façon continue ou progressive à l'intérieur d'une largeur de bande prédéfinie.

4. Modèle de surface selon l'une quelconque des revendications 1 à 3, **caractérisé en ce que** les structures de diffraction fines au plan microscopique des parties de surface (14 ; 15 ; 16; 17 ; 18) dans l'élément de surface (11) présentent au moins une fréquence spatiale f_{B} et les structures en relief efficaces au plan de l'optique de diffraction et fines au plan microscopique des N modèles présentent des fréquences spatiales f_{R}, aucun multiple entier des fréquences spatiales f_{B} n'étant un multiple entier de l'une des fréquences spatiales f_{R}.

5. Modèle de surface avec N modèles identifiables visuellement sous la forme d'un hologramme de volume (30) mémorisé dans une feuille avec des structures (30') efficaces au plan de l'optique de diffraction et fines au plan microscopique constituées de variations locales de l'indice de réfraction dans le matériau de la feuille, avec au moins un élément de surface (11) indépendant des N modèles, les structures fines (30') de l'élément de surface (11) étant disposées avec au moins une fréquence spatiale f_{B} de façon qu'un modèle de diffraction indépendant des N modèles se forme dans une zone (27) petite, attribuée à la fréquence spatiale f_{B}, de l'angle de diffraction,
**caractérisé en ce que** les fines structures (30') des N modèles identifiables visuellement présentent des fréquences spatiales f_{R} qui se différencient de la fréquence spatiale f_{B} d'un intervalle de fréquence **spatiale ± Δf dans la plage de 20 à** 100 lignes par mm et
**en ce que** le volume de l'élément de surface (11) en tant que structures partielles contient une superposition d'au moins deux structures fines (30') avec au moins une fréquence spatiale f_{B} et avec différentes valeurs ϕ.ϕ_{z} de l'azimut.

6. Modèle de surface selon la revendication 5, **caractérisé en ce que** les fréquences spatiales f_{B} dans la structure (20') des éléments de surface (11) ne sont pas des multiples entiers de l'une des fréquences spatiales f_{R} des N modèles identifiables visuellement.

7. Modèle de surface selon l'une quelconque des revendications 1 à 6, **caractérisé en ce que** les éléments de surface (11) sont des éléments d'information, **en ce que** chaque structure partielle des éléments de surface (11) définit un état à partir de quatre états et **en ce qu'**un grand nombre des éléments de surface (11) forment un code optique qui peut être lu à la machine.

8. Modèle de surface selon la revendication 7, **caractérisé en ce que** les éléments de surface (11) ne sont pas disposés en continu à l'intérieur des N modèles identifiables visuellement des éléments de surface (11) et constituent un groupe libre.

9. Modèle de surface selon la revendication 7, **caractérisé en ce que** les éléments de surface (11) sont de même grandeur et sont disposés pour former un ensemble de surfaces (12) linéaire et en forme de bande de la hauteur d'un élément de surface (11).

10. Modèle de surface selon la revendication 9, **caractérisé en ce que**, dans l'ensemble de surfaces (12), une succession des éléments de surface (11) dans les parties de surface (14 ; 15) n'est présentée que par les deux structures partielles constituées de l'une des quatre paires, formés à partir des structures partielles (a, b) (c, d), (a, c) ou (c, e) et ce que la paire de structure partielle de chaque élément de surface (11) définit la position de l'élément de surface (11) dans l'ensemble de surfaces (12) et un bit de l'information logique.

11. Modèle de surface selon la revendication 7, **caractérisé en ce que** les éléments de surface (11) forment au moins un ensemble de surfaces compact (13) à l'intérieur des N modèles identifiables visuellement, qui présente la forme d'un carré ou une autre forme de surface limitée de façon quelconque.

12. Modèle de surface selon l'une quelconque des revendications précédentes, **caractérisé en ce qu'**au moins l'une des parties de surface (14 ; 15; 16 ; 17 ; 18) présente avec une structure partielle la forme d'une écriture (36) constituée de caractères alphanumériques sur le fond avec l'autre structure partielle.

13. Modèle de surface selon l'une quelconque des revendications précédentes, **caractérisé en ce qu'**au moins un élément graphique (31 ; 32) d'au moins l'un des N modèles s'étend sur un élément de surface (11) et l'élément de surface (11) se subdivise en sous-éléments (33 ; 34).

14. Utilisation d'un modèle de surface selon l'une quelconque des revendications précédentes comme élément de sécurité pour un document (2) et pour l'identification du document (2) dans un lecteur.
